# EUROPÄISCHE PATENTANMELDUNG

(11) **EP 1 479 436 A2**
(43) Veröffentlichungstag der Anmeldung: **24.11.2004**
(21) Anmeldenummer: 04019108.2
(22) Anmeldetag: 06.11.2002
(51) Int. Cl.: B01J 20/04, B01J 20/06, B01J 20/28, B01J 20/32, B01D 53/02, B01D 53/047, B01J 20/30

(54) **Verfahren zur Herstellung von hohlen porösen Körpern für die Separation einer in einem Gasgemisch enthaltenen Komponente**

(30) Priorität: 08.11.2001 DE 10155643
(62) Teilanmeldung aus: 02796494.9
(71) Anmelder: IPC Process Center GmbH & Co., 01277 Dresden (DE); Fraunhofer-Gesellschaft zur Förderung der angewandten Forschung e.V., 80686 München (DE)
(72) Erfinder: Van Lookeren, Constant, 3277 BR Bilthoven (NL); Nebelung, Manfred Dr., 01309 Dresden (DE); Klemm, Hagen Dr., 01217 Dresden (DE); Bretschneider, Frank, 01465 Radeberg (DE)
(74) Vertreter: Pfenning, Meinig & Partner GbR

(57) **Zusammenfassung**

Die Erfindung betrifft Körper für die Separation einer in einem Gasgemisch enthaltenen Komponente. Dabei kann es sich bei den Gasgemischen beispielsweise um Kohlenwasserstoffe enthaltende Rohgase, wie Erdgas oder auch um Abgas handeln. Gemäß der gestellten Aufgabe sollen mit den erfindungsgemäßen Körpern Komponenten aus Gasgemischen über größere Zeiträume mit annähernd konstanter Leistung separiert werden können. Dabei weist der erfindungsgemäße Körper für die Separation aktive Bereiche, die aus einer porösen Schale gebildet sind, auf. Diese eine poröse Schale aufweisenden Körper können in einer Vorrichtung eingesetzt werden und innerhalb eines Behälters mindestens ein aus einer Schüttung dieser Körper gebildetes Bett vorhanden sein, durch das das Gasgemisch zur Separation der unerwünschten Komponente geführt wird. Die Erfindung ist insbesondere vorteilhaft für die Separation von Schwefelverbindungen aus Gasgemischen geeignet.

## Beschreibung

Die Erfindung betrifft ein Verfahren zur Herstellung von Hohlkörpern für die Separation einer in einem Gasgemisch enthaltenen Komponente. Dabei kann es sich bei den Gasgemischen beispielsweise um Kohlenwasserstoffe enthaltende Rohgase, wie Erdgas oder auch um Abgas handeln. So können in solchen Gasgemischen enthaltene schädliche Komponenten, wie z.B. Schwefel auch in Form von Verbindungen entfernt werden, um das Gasgemisch bei der weiteren Nutzung und Verarbeitung frei von negativen Eigenschaften zur Verfügung zu stellen oder von schädlichen Komponenten freies Gas an die Umwelt abzugeben.

Außerdem können auch Stickstoff oder Stickoxide separiert werden, um einmal die Verbrennungseignung zu verbessern oder nahezu stickoxidfreie Abgase an die Umwelt abzugeben.

Des Weiteren können auch Phosphor, Halogene oder deren Verbindungen separiert werden.

Für die Separation der unterschiedlichen Komponenten ist eine Vielzahl von Lösungen bekannt, wobei für die jeweilige zu separierende elementare oder als chemische Verbindung vorliegende Komponente unterschiedliche chemische Reaktionen oder auch physikalische Effekte ausgenutzt werden.

In vielen Fällen werden solche Gasgemische mittels fester Stoffe gereinigt, wobei die Separation durch Sorption erfolgt. Hierbei spielt die jeweils ausnutzbare Oberfläche des verwendeten Stoffes eine Rolle, um eine höhere Separationskapazität zu sichern. Bekanntermaßen lässt sich eine Oberflächenvergrößerung durch die geometrische Gestaltung und insbesondere die spezifische Oberfläche eines Stoffes durch die Porosität beeinflussen.

Bekanntermaßen verhalten sich aber Porosität und mechanische Festigkeit genau entgegengesetzt, so dass bezüglich der Porosität Grenzen gesetzt sind. Auch der Verwendung von festigkeitserhöhenden Bindemitteln sind Grenzen gesetzt, da diese die Separationseigenschaften negativ beeinflussen.

Für die Separation von Komponenten werden bisher entsprechend geeignete Stoffe, überwiegend chemische Verbindungen als Granulat in den verschiedensten Korngrößen eingesetzt und eine günstige Porosität, häufig durch entsprechende Sinterung eingestellt.

Das zu reinigende oder von einer Komponente zu befreiende Gasgemisch wird dann durch ein aus einer Schüttung des Granulates gebildetes Festbett geführt und die jeweilige zu separierende Komponente sorbiert. Das Bett bildet dabei für den Gasstrom eine Drosselstelle, so dass ein von der Korngröße und der Dimensionierung des Bettes beeinflusster Staudruck an der Eintrittseite zu verzeichnen ist. Dies erfordert eine erhöhte Leistung für die Gasförderung. Infolge einer verringerten mechanischen Festigkeit des porös verwendeten Stoffes tritt Abrieb auf, der die Gasströmung behindert und dieser Effekt die Nutzungsdauer eines Bettes stark begrenzen kann, so dass ein Austausch in relativ kurzen Zeitintervallen erforderlich ist.

Bekanntermaßen weist jeder zur Separation geeignete Stoff, im wesentlichen von der nutzbaren Oberfläche und Masse beeinflusst eine begrenzte Separationskapazität und einen Sättigungsbereich auf, so dass eine vollständige Nutzung in der Regel nicht erfolgen kann.

Bei der Separation ist es außerdem gewünscht über einen längeren Zeitraum eine annähernd gleichmäßige Separationsleistung zu gewährleisten. Dies bedeutet eine nahezu konstante Menge (Masse) der Komponente pro Zeit zu separieren. Hier weisen bekannte Lösungen jedoch starke Defizite auf, da im Laufe der Nutzung die Separationsleistung reduziert ist und dieser Effekt bereits lange vor Erreichen der Sättigungsgrenze auftritt. Ein Nutzer muss entweder einen verringerten Reinheitsgrad des behandelten Gases oder eine kürzere effektive Nutzungsdauer in Kauf nehmen. Letzteres bedeutet in der Regel, dass der Zyklus Separation - Regeneration in kürzeren Zeiträumen durchgeführt werden muss, was selbstverständlich mit erhöhten Anlagen- und Betriebskosten verbunden ist.

Es ist daher Aufgabe der Erfindung eine Lösung vorzuschlagen, mit der Komponenten aus Gasgemischen über größere Zeiträume mit annähernd konstanter Leistung separiert werden können.

Erfindungsgemäß wird diese Aufgabe mit gemäß Anspruch 1 herstellbaren Hohlkörpern, die mit den Merkmalen des nebengeordneten Anspruchs 5 bestimmt sind, gelöst.

Vorteilhafte Ausgestaltungen und Weiterbildungen können mit den in den untergeordneten Ansprüchen genannten Merkmalen erreicht werden.

Erfindungsgemäß sollen Hohlkörper für die Separation bestimmter Komponenten aus Gasgemischen eingesetzt werden, deren für die Separation aktiver Bereich in Form einer porösen Schale ausgebildet ist.

Diese Schale umschließt mindestens einen Hohlraum allseitig, so dass ein geschlossener Körper gebildet wird. Dabei sollen unter den Begriff Hohlraum nicht die einzelnen Poren fallen.

Dieser Körper ist besonders bevorzugt sphärisch gekrümmt und als Hohlkugel ausgebildet. Dabei ist eine solche Kugelform nicht nur wegen der Kugelgeometrie mit großer Oberfläche vorteilhaft, sondern bietet auch strömungstechnisch günstige Verhältnisse, wenn ein Gasgemisch bei der Separation durch ein aus solchen Körpern gebildetes Bett geführt wird, da ein entsprechend reduzierter Staudruck an der Eintrittseite eines solchen Bettes erreicht werden kann.

Neben diesen Eigenschaften kann auch formbedingt eine erhöhte mechanische Festigkeit bei geringerer Masse erreicht werden.

In überraschender Weise kann die Schalenform mit entsprechend begrenzter Dicke, bis maximal 5mm, bevorzugt kleiner 2 mm auch eine fast konstante Separationsleistung über einen großen nutzbaren Zeitraum sichern, wobei dies zumindest bis in die Nähe der Sättigungsgrenze gewährleistet ist. Dadurch können die Separationsqualität verbessert, demzufolge auch der Reinheitsgrad des behandelten Gases konstant gehalten und außerdem die Betriebskosten reduziert werden.

Eine Nutzung der erfindungsgemäßen Hohlkörper für die Separation kann zumindest bis zu einer Beladung erfolgen, die in der Nähe der Sättigungsgrenze liegt, ohne dass die Gasreinheit wesentlich beeinflusst wird.

Körper in Kugelform werden auf an sich bekannte Art und Weise hergestellt werden. Dabei wird ein Pulver, das im Wesentlichen aus einem für die jeweilige zu separierende Komponente geeigneten Stoff besteht als Dispersion/Suspension auf einen kugelförmigen Kern aufgebracht und nach einem Trocknen einer Sinterung unterzogen. Der Kern kann aus einem für die Separation inaktiven Material bestehen, wobei jedoch das thermische Verhalten dieses Stoffes unter Berücksichtigung der Wärmeausdehnung und Schwindung beim Sintern beachtet werden sollte, um Rissbildungen der Schale möglichst zu vermeiden. Der Kern kann auch aus einem organischen Material, z.B. vorgeschäumtes Polystyrol bestehen, das bei Temperaturen unterhalb 700 ° C sicher ausgetrieben werden kann, so dass in diesen Fällen die Körper als Hohlkugeln vorliegen.

Bei Körpern in Kugelform sollte das Verhältnis Außendurchmesser zu Schalendicke im Bereich 2 zu 1 bis 10 zu 1 liegen, wobei die kleineren Verhältnisse bei kleinen Außendurchmessern der Körper zu bevorzugen sind. Die Schalendicke sollte möglichst nicht größer als 3 mm sein, wobei eine Obergrenze von 8 mm nicht überschritten werden sollte.

Die mechanische Festigkeit und Porosität der Schale kann durch das verwendete Pulver, insbesondere dessen Korngröße, ggf. mit Zusätzen die in der Schale verbleiben und die Sinterbedingungen, beeinflusst werden. Dabei sollte die Sinterung so durchgeführt werden, dass eine gerade ausreichende mechanische Festigkeit mit möglichst hoher Porosität erreicht werden.

Die äußeren Abmessungen (Außendurchmesser) und die Masse der erfindungsgemäßen Körper können, die jeweilige Applikation berücksichtigend variiert werden, wobei die Porosität konstant gehalten werden kann.

Dem Pulver können an sich bekannte Sinterhilfsmittel, z.B. SiO₂ zugegeben werden. Dabei sollte der Anteil von SiO₂ kleiner 10 Masse-%, bevorzugt kleiner 5 Masse-% sein.

Die Schale kann aus verschiedenen Stoffen gebildet werden. Sie kann aus Metalloxiden oder Metalloxidgemischen gebildet werden, wobei Oxide II-wertiger Metalle bevorzugt sind. So kann beispielsweise für die Separation von Schwefel in Form von Schwefelwasserstoff mit Oxiden II-wertiger Metalle (z.B. Cu, Fe, Co, Ni, Zn) durch chemische Umwandlung aus einem Gasgemisch, wie beispielsweise Erdgas separiert werden.

So reagieren beispielsweise ZnO mit H₂S zu ZnS und H₂O. Dabei ist ZnS chemisch stabiler als H₂S und kann in fester Form am Körper gehalten werden.

Bei einer in bestimmten Zeitabständen, möglichst vor Erreichen der Sättigungsgrenze durchzuführenden Regeneration kann ZnS mit H₂O zu Schwefelsäure reagieren, wobei sich gleichzeitig wieder ZnO in der Schale bildet, das für eine neue Separation genutzt werden kann.

Insbesondere für die Separation von H₂S, der in höheren Konzentrationen in einem Gasgemisch enthalten ist, können neben Hohlkörpern, deren Schale im Wesentlichen aus ZnO gebildet ist, auch Körper aus Al₂O₃ als Katalysator eingesetzt werden. Dabei kann das Al₂O₃ ebenfalls die Schale eines solchen Hohlkörpers bilden. Mit diesen Katalysatoren und den ZnO-Körpern kann dann der so genannte Claus-Prozess durchgeführt werden, bei dem SO₂ und 2H₂S katalytisch zu 3S und 2H₂O reagieren.

Für die Separation von Schwefelverbindungen können auch bestimmte an sich ebenfalls bekannte Zeolithe eingesetzt werden.

Zeolithe, wie sie beispielsweise in US 6,197,092 bezeichnet sind, können als so genannte Molekularsiebe auch für die Separation von Stickstoff eingesetzt werden, wobei dies vorteilhaft mittels eines dort ebenfalls erwähnten Druck-Wechsel-Adsorptions-Prozesses (Pressure-Swing-Adsorption - PSA) erfolgen kann.

Auch Phosphor, Halogene oder deren Verbindungen können mit solchen Molekularsieben separiert werden.

Sollen Stickoxide, beispielsweise aus einem Abgasstrom separiert werden kann als Schalenmaterial BaCO₃ eingesetzt werden, das mit NO₂ zu BaO reagiert. Auch hier ist eine Regeneration möglich. Dabei wird das gebildete BaO erwärmt (T ca. 450 ° C) und es kann mit Kohlenstoffverbindungen (z.B. CO₂) wieder BaCO₃ gebildet werden.

Für die Separation anderer Elemente oder Verbindungen können aber auch andere Carbonate eingesetzt werden.

Da bei der Regeneration bzw. auch bei der Separation überwiegend bei erhöhten Temperaturen gearbeitet wird, wirkt sich die verringerte Masse der im wesentlichen aus den Schalen gebildeten erfindungsgemäßen Körper durch Reduzierung der erforderlichen Wärmeenergie günstig aus. Selbstverständlich ist auch der erforderliche Materialeinsatz des für die Separation benutzten Stoffes kleiner. Dabei wird mit geringerer Stoffmasse annähernd die gleiche Menge des jeweiligen Stoffes aus dem Gasgemisch aufgenommen und kann separiert werden.

Die erfindungsgemäßen Körper können aber auch zur Gastrocknung eingesetzt werden und z.B. Wasser oder Wasserdampf einem Gas/Gasgemisch entziehen.

Die erfindungsgemäßen Hohlkörper können in Vorrichtungen eingesetzt werden, bei denen in Behältern durch die ein Gasgemisch für die Separation geführt wird, mindestens ein aus einer Schüttung der Hohlkörper als so genanntes Festbett ausgebildet ist. Die Hohlkörper können aber auch, insbesondere wegen ihrer erhöhten Festigkeit bei gleicher Porosität, ein Wirbel- oder Fluidbett bilden, wobei das Gasgemisch mit einem erhöhten Volumenstrom eingesetzt wird. Ein solches Bett kann auch durch durch infolge von Gravitations- oder mechanischen Kräften bewegten Hohlkörpern gebildet werden. Die Hohlkörper können dabei kontinuierlich dem für die Separation aktiven Bereich eines solchen Bettes zugeführt, mit der zu separierenden Komponente beladenen Hohlkörper aus dem Bett abgeführt, einer Regeneration zu- und im Kreislauf rückgeführt werden.

Dabei strömt das Gasgemisch zur Separation durch dieses Bett und es wird dort durch chemische und/oder physikalische Effekte eine Komponente gehalten, so dass aus diesem Bett oder einer Kaskade mehrerer solcher Betten austretendes Gas weitestgehend von dieser Komponente frei ist.

Wird die Sättigungsgrenze der Hohlkörper im Bett bzw. den Betten für die jeweilige zu separierende Komponente fast erreicht, ist die Durchführung einer Regeneration erforderlich. Dies kann durch Wärmezufuhr, also Beheizung der Betten bzw. der gesamten Behälter erreicht werden. Insbesondere bei gebildetem ZnS kann die Regeneration auch durch eine Zufuhr von Wasser erfolgen. Dabei kann Wasserdampf oder auch Wasserdampf enthaltendes Fluid durch das Bett geführt werden, um die Rückbildung von ZnS zu ZnO auszulösen.

Um eine kontinuierliche Gasreinigung/Separation durchführen zu können, ist es vorteilhaft mindestens zwei solcher Behältnisse in gleicher Ausführung parallel zueinander anzuordnen und alternierend zu betreiben. Demzufolge wird in einem der Behältnisse eine Gasreinigung/Separation durchgeführt, währenddessen im anderen die Regeneration der Hohlkörper erfolgt. Dabei sollte zumindest die für die Regeneration erforderliche Zeit kleiner als die Zeit bei der ein signifikanter Abfall der Separationsleistung mit verringerter Beladung pro Zeit im jeweils anderen Behälter auftritt, sein. Der Gasstrom kann so durch entsprechendes Schalten von Ventilen durch den jeweiligen Behälter geführt und so eine gleiche Reinheit des austretenden Gasstromes bezüglich der entsprechenden Komponente erreicht werden.

Das Umschalten von einem auf den anderen Behälter kann zeitgesteuert aber auch geregelt erfolgen, wobei im letztgenannten Fall im austretenden Gasstrom die Konzentration der entsprechenden Komponente bestimmt und bei Überschreiten eines Grenzwertes das Umschalten des Gasstromes in einen anderen Behälter initiiert wird.

Die Hohlkörper, die als Schüttung das eine oder mehrere Betten bilden, können in jeweils einem Bett zumindest annähernd gleiche Außenabmessungen/Außendurchmesser aufweisen. In mehreren eine Kaskade bildenden Betten können Hohlkörper mit unterschiedlichen Abmaßen eingesetzt sein und es besteht die Möglichkeit in einem Bett Hohlkörper mit unterschiedlichen Außenabmessungen/Außendurchmessern einzusetzen.

In jedem Fall sollten die Strömungsbedingungen des Gasgemisches beim Durchströmen jedoch so beeinflusst werden, dass der Druckabfall möglichst klein gehalten wird und trotzdem eine für die Separation ausreichende Kontakt- bzw. Verweilzeit in den Betten gegeben ist.

Die erfindungsgemäßen Hohlkörper sollten in den Betten, unter Verzicht auf Bindemittel, als lose Schüttung vorliegen.

Vorteilhaft kann in den Betten auch ein katalytisch wirkender Stoff zusätzlich vorhanden sein, mit dem die Separation erleichtert, ermöglicht und ggf. die erforderliche Reaktionszeit bzw. zugeführte Energie reduziert werden kann.

Ein solcher katalytisch wirkender Stoff, beispielsweise Platin kann auch an der Oberfläche solcher Hohlkörper vorhanden oder ein solcher Hohlkörper damit dotiert sein.

So kann beispielsweise Stickstoffmonoxid katalytisch zu Stickstoffdioxid oxidiert und Stickstoffdioxid durch chemische Reaktion mit BaCO3 aus einem Abgas separiert werden.

Nachfolgend soll die Erfindung beispielhaft erläutert werden.

Dabei zeigen:

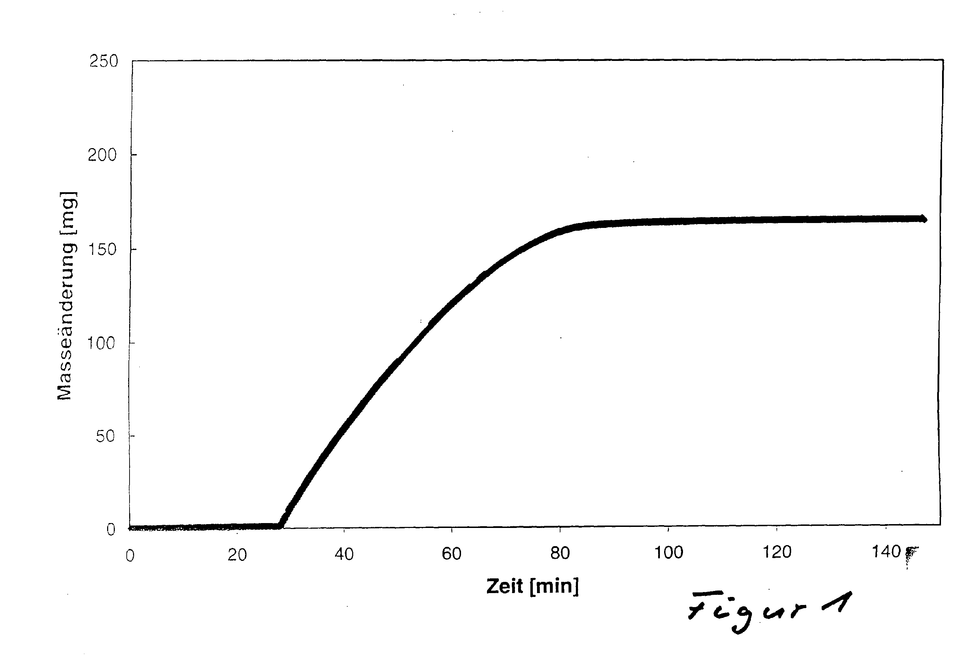

- Figur 1: ein Diagramm des zeitlichen Verlaufs der Separationsleistung eines Vergleichsbeispiels und

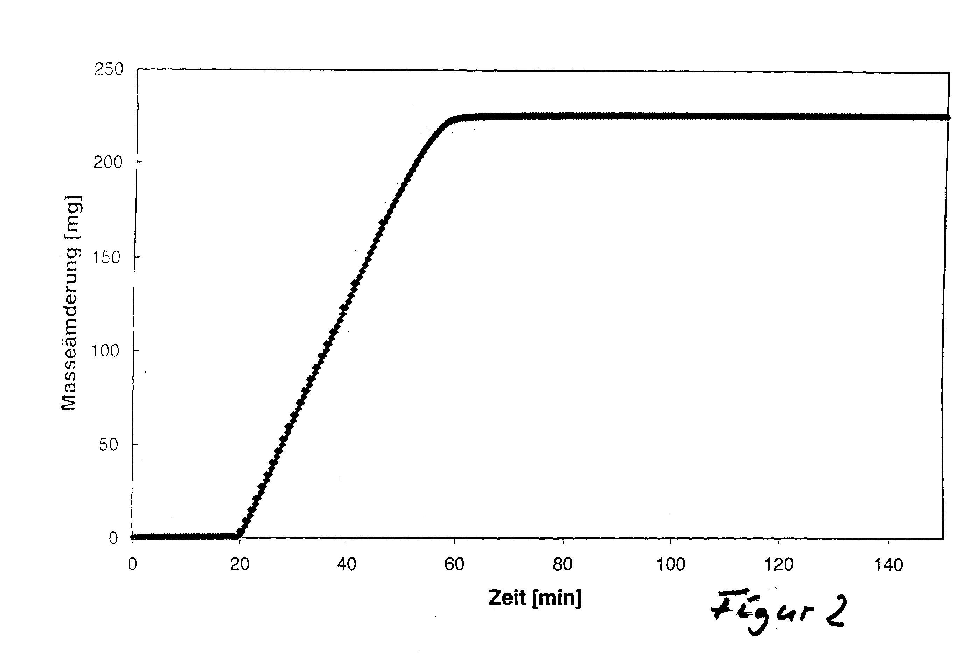

- Figur 2: ein Diagramm des zeitlichen Verlaufs der Separationsleistung der mit erfindungsgemäßen Körpern ermittelt wurde.

Insbesondere die kontinuierliche Separationsleistung, die mit erfindungsgemäßen Hohlkörpern für die Separation von Schwefelwasserstoff aus einem Gasgemisch erreichbar ist, soll gegenüber an sich vergleichbaren Körpern nachgewiesen werden.

Dabei wurden einmal Vollkugeln, als Vergleichsbeispiel und zum anderen Hohlkugeln, als erfindungsgemäße Hohlkörper hergestellt.

In beiden Fällen wurde ZnO mit 2 Masse-% SiO₂ zu Kugeln verarbeitet. Die Vergleichskugeln wiesen einen Außendurchmesser zwischen 2,3 und 2,4 mm und die erfindungsgemäßen Hohlkugeln einen Außendurchmesser von ca. 2,9 mm auf. Der Innendurchmesser der erfindungsgemäßen Hohlkugeln lag bei ca. 1 mm, so dass die separationsaktive Schale eine Dicke von ca. 0,9 mm aufwies. Beide Arten von Körpern wurden unter gleichen Bedingungen hergestellt, was insbesondere die verwendeten Ausgangspulver und das Sintern betrifft. Demzufolge konnte eine gleiche Porosität von ca. 78 % eingestellt werden. Die Schüttdichte lag bei den Vergleichskörpern bei 0,85 g/ml und bei den erfindungsgemäßen Hohlkörpern bei 0,79 g/ml. Die spezifische Bruchfestigkeit der erfindungsgemäßen Hohlkörper lag bei 2,9 MPa, wohingegen die Vollkugeln lediglich 1,99 MPa erreichten. Die spezifische Oberfläche der Vergleichskörper betrug 41,7 m²/g und die der erfindungsgemäßen Hohlkörper 48,6 m²/g.

In beiden Fällen wurde eine Schüttung solcher Körper mit einer Gesamtmasse von 870 mg Vergleich und 1.140 mg (Erfindung) einer Schwefelwasserstoff enthaltenden Stickstoffatmosphäre ausgesetzt. Dabei wurden kontinuierlich bei einem Druck von einem bar über Atmosphärendruck Volumenströme von 17,0 ml/min Stickstoff und 7,0 ml/min Schwefelwasserstoff zugeführt.

Die Temperatur wurde konstant auf 400 °C gehalten. Die Beladung wurde über die Zeit in mg gemessen.

Dabei konnte nach einer versuchsbedingten Einlaufphase ein wesentlich konstanterer Anstieg der Masse an der aus erfindungsgemäßen Hohlkörpern gebildeten Schüttung festgestellt werden.

Im Gegensatz fällt der Anstieg der die Separation von Schwefelwasserstoff aus dem Gasgemisch repräsentierenden Massezunahme, zumindest nach Erreichen von ca. 50 % der maximalen Separationskapazität, also vor Erreichen der Sättigungsgrenze bei den vollen Vergleichskörpern deutlich geringer aus. Daraus resultiert, dass nach einer gewissen Zeit deutlich weniger Schwefelwasserstoff separiert und chemisch in ZnS umgewandelt werden kann, als dies mit den erfindungsgemäßen hohlen kugelförmigen Körpern möglich ist.

Bei beiden Untersuchungen konnte eine Gesamtmasse von 332 g/l Schwefelwasserstoff separiert werden. Dabei konnte diese Masse mit dem erfindungsgemäßen Beispiel bereits nach 38 min erreicht werden, wohingegen bei den Vergleichskörpern 57 min erforderlich waren, was auch eine erhöhte Separationswirkung nachweist, also aus einem Gasgemisch nicht nur schneller sondern auch eine größere Menge Schwefelwasserstoff separiert werden kann und eine höhere Reinheit eines so behandelten Gasgemisches zu verzeichnen ist.

Vergleicht man nun den zeitlichen Verlauf der Schwefelwasserstoffaufnahme an den Vergleichskörpern und den erfindungsgemäßen Hohlkörpern bis zum Erreichen von 50 % als v₁=10,3 mg/g*min beim Vergleichsbeispiel und v₁= 11,9 mg/g*min beim erfindungsgemäßen Beispiel und nach Erreichen dieser 50 % bis hin zur Sättigung v₂=5,1 mg/g*min (Vergleich) und v₂=10,5 mg/g*min (Erfindung), so ergibt das Verhältnis v₂/v₁ für die Vergleichskörper 0,5 und die erfindungsgemäßen Hohlkörper einen Wert von 0,88, was das gleichmäßigere Separationsverhalten weiter belegt.

Es kann also gleichmäßiger und näher bis an die Sättigungsgrenze separiert werden, ohne den Reinheitsgrad des behandelten Gasgemisches deutlich zu verschlechtern.

## Patentansprüche

1. Verfahren zur Herstellung von hohlen porösen Körpern für die Separation einer in einem Gasgemisch enthaltenen Komponente, bei dem
eine ein Pulver enthaltende Dispersion/Suspension auf einen Kern aus einem organischen Material aufgebracht,
nachfolgend eine Trocknung und Sinterung durchgeführt wird, wobei das organische Material ausgetrieben wird und ein Pulver, in dem eine für die Separation der jeweiligen Komponente geeigneter Stoff mit mindestens 90 Masse-% enthalten ist, eingesetzt wird.

2. Verfahren nach Anspruch 1,
**dadurch gekennzeichnet, dass** als für die Separation geeigneter Stoff ein Pulver eines Metalloxides eingesetzt wird.

3. Verfahren nach Anspruch 1 oder 2,
**dadurch gekennzeichnet, dass** als für die Separation geeigneter Stoff Zinkoxid, Zeolith, BaCO₃, CuO, FeO, CoO und/oder NiO bzw. Al₂O₃ eingesetzt wird.

4. Verfahren nach einem der vorhergehenden Ansprüche, **dadurch gekennzeichnet, dass** ein organischer Kern aus vorgeschäumtem Polystyrol mit der Suspension/Dispersion beschichtet wird.

5. Poröser Hohlkörper mit einer einen aus einem für die jeweilige zu separierende Komponente geeigneten Stoff enthaltenden oder gebildeten Schale, hergestellt mit einem Verfahren nach einem der Ansprüche 1 bis 4, **dadurch gekennzeichnet, dass** bei den Körpern in Kugelform ein Verhältnis Außendurchmesser zu Schalendicke im Bereich 2:1 bis 10:1 eingehalten ist und ein Verhältnis v₁/v₂ zwischen 0,5 und 0,9 erreicht worden ist; wobei v₁ die erreichbare Massezunahme einer zu separierenden Komponente in mg/g·t bis zum Erreichen von 50 % der maximalen Separationskapazität und v₂ die Massezunahme nach Erreichen dieser 50 %-igen Sättigungsgrenze bis hin zur Sättigungsgrenze ist.

6. Hohlkörper nach Anspruch 5,
**dadurch gekennzeichnet, dass** die poröse Schale aus einem Metalloxid gebildet ist oder ein Metalloxid mit mindestens 90 Masse-% enthält.

7. Hohlkörper nach Anspruch 5,
**dadurch gekennzeichnet, dass** die poröse Schale aus einem Zeolith gebildet ist oder ein Zeolith mit mindestens 90 Masse-% enthält.

8. Hohlkörper nach Anspruch 7,
**dadurch gekennzeichnet, dass** die poröse Schale ein Molekularsieb bildet.

9. Hohlkörper nach einem der Ansprüche 5 bis 8,
**dadurch gekennzeichnet, dass** die Schale eine Dicke im Bereich zwischen 0,5 bis 8 mm aufweist.

10. Hohlkörper nach einem der Ansprüche 5 bis 9,
**dadurch gekennzeichnet, dass** die Schale eine Dicke zwischen 0,5 bis 2 mm aufweist.

11. Hohlkörper nach einem der Ansprüche 5 bis 10,
**dadurch gekennzeichnet, dass** der Außendurchmesser im Bereich zwischen 1 bis 15 mm liegt.

12. Hohlkörper nach einem der Ansprüche 5 bis 11,
**dadurch gekennzeichnet, dass** eine Bruchfestigkeit im Bereich zwischen 2 und 2,9 MPa eingehalten ist.

13. Hohlkörper nach einem der Ansprüche 5 bis 12,
**dadurch gekennzeichnet, dass** eine Schüttdicke unterhalb 0,85 g/ml erreicht worden ist.

14. Hohlkörper nach einem der Ansprüche 5 bis 13,
**dadurch gekennzeichnet, dass** eine spezifische Oberfläche oberhalb 42 m²/g bis 48,6 m²/g erreicht worden.

15. Hohlkörper nach einem der Ansprüche 5 bis 14,
**dadurch gekennzeichnet, dass** ein volumetrischer Sättigungswert, der ≥ 80 % des stöchiometrisch maximalen Sättigungswertes ist, erreichbar ist.

16. Hohlkörper nach einem der Ansprüche 5 bis 15,
**dadurch gekennzeichnet, dass** ein volumetrischer Sättigungswert ≥ 7,5 mol/l der Sättigungsgrenze bei einer Separation von H₂S erreichbar ist.
